# EUROPÄISCHE PATENTSCHRIFT

(11) **EP 3 327 494 B1**
(45) Veröffentlichungstag und Bekanntmachung des Hinweises auf die Patenterteilung: **21.12.2022**
(21) Anmeldenummer: 17184544.9
(22) Anmeldetag: 02.08.2017
(51) Int. Cl.: F21V 8/00

(54) **DOPPELSEITIGER BILDSCHIRM MIT GEMEINSAMEM BACKLIGHT**
DOUBLE-SIDED SCREEN WITH COMMON BACKLIGHT
ÉCRAN DOUBLE FACE AVEC RÉTROÉCLAIRAGE COMMUN

(30) Priorität: 28.11.2016 DE 102016122922
(43) Veröffentlichungstag der Anmeldung: 30.05.2018
(73) Patentinhaber: ANNAX GmbH, 63834 Sulzbach (DE)
(72) Erfinder: Malcherek, Werner, 85221 Dachau (DE)
(74) Vertreter: Pöhner, Wilfried Anton

(56) Entgegenhaltungen:
- WO-A1-2011/055847
- CN-A- 105 607 271
- US-A1- 2004 223 343
- US-A1- 2007 064 173
- US-A1- 2007 139 966
- US-A1- 2010 097 823
- US-A1- 2012 140 304
- US-A1- 2015 301 779
- US-B1- 7 223 007

## Beschreibung

Vorliegende Erfindung befasst sich mit einem doppelseitigen Bildschirm gemäß des Oberbegriffs des Anspruchs 1.

Doppelseitige bzw. beidseitig ablesbare Bildschirme haben einige offensichtliche Vorteile. Bei Verwendung eines Computer bzw. Laptopbildschirms mit dieser Eigenschaft können auch einander gegenübersitzende Personen die gleiche bzw. bei entsprechender unabhängiger Ansteuerbarkeit der jeweiligen Displays, auch unterschiedliche Informationen angezeigt bekommen. So wird es möglich, z. B. bei Meetings gemeinsam eine Präsentation zu betrachten. Es ist auch möglich, auf beiden Displays grundsätzlich das Gleiche, aber auf einem der Displays zusätzliche oder auch weniger Informationen anzuzeigen. So kann zum Beispiel ein Verkäufer ein Angebot für einen Kunden zusammenstellen, welches dieser auf dem vom Verkäufer aus gesehenen rückseitigen Display angezeigt bekommt, wobei aber nicht alle für den Verkäufer sichtbaren Informationen auch dem Kunden angezeigt werden. Eine andere denkbare Verwendung ist das gemeinsame Durchführen von Computerspielen, bei dem mit nur einem Computer nun zwei Spieler teilnehmen können und dabei miteinander oder gegeneinander antreten. Eine weitere mögliche Anwendung ist im Schulunterricht, wo für die Schüler auf einer Seiter nur die Fragen, jedoch für den Lehrer auf der anderen Seite auch die Antworten eingeblendet werden können.

Weiterhin können doppelseitige Displays auch vorteilhaft als Anzeigeelement in Fahrzeugen verwendet werden. So zum Beispiel in den Fenstern von Bussen oder Zügen, um etwa Werbe- oder Reiseinformationen anzuzeigen. Wird das Display im Außenfenster eingebaut, können sowohl die Insassen als auch außenstehende Personen dies betrachten. Auch bei Verwendung im Inneren des Fahrzeugs, zum Beispiel in einer Abteiltür oder einem Abteilfenster, können mehrere Insassen davon profitieren. Der Vorteil im Vergleich zur Verwendung von zwei unabhängigen Bildschirmen ist in jedem Fall der wesentlich verringerte Flächenbedarf und ein damit einhergehender Gewinn an Übersichtlichkeit und Ästhetik.

Im Stand der Technik sind sowohl Bildschirme für Computer beziehungsweise Laptops mit zweiseitiger Ablesbarkeit sowie zweiseitig ablesbare Displays bekannt.

So offenbart das deutsche Gebrauchsmuster DE 20318035U1 für Peter Ruckert einen Laptop bzw. Computerbildschirm mit jeweils einem Display auf Vorder- und auf der Rückseite. Es wird aber die Verwendung zweier unabhängiger Displays gelehrt, was einen erhöhten Platzbedarf, d.h. eine höhere Dicke des Bildschirms, und auch einen höheren Energieverbrauch bedeutet. Bedienelemente zum Einschalten sind auf beiden Seiten, Elemente zur Steuerung der Helligkeit und des Kontrastes der Displays jedoch nur auf einer Seite vorhanden. Ein im Handel erhältliches Beispiel für ein Laptop mit doppelseitigem Bildschirm ist der Asus Tai-Chi-Laptop, welcher im Jahr 2012 auf den Markt kam.

Die Veröffentlichungsschrift US 2014/0062839A1 für Dominici et al. offenbart eine Anzeigevorrichtung bestehend aus einem Stapel von zwei farbigen Matrix-Displays, welche zwischen sich ein monochromes Matrix-Display oder in ihrer Transparenz steuerbare Scheibe mit matrixartig angeordnetem Bereich einschließen. Als farbige Displays werden selbstleuchtende oLED-Displays vorgeschlagen. Durch die Anordnung der beiden farbigen MatrixDisplays mit zwischenliegendem monochromen Display wird erreicht, dass auf einer Seite angezeigte Information im Prinzip entweder auch auf der anderen Seite sichtbar, oder auch mittels des monochromen Displays ausblendbar ist. Im Prinzip können aber auf beiden Seiten komplett unterschiedliche Informationen angezeigt werden.

Die Veröffentlichungsschrift US 2005/0225205A1 für Chae et al. offenbart beidseitig ablesbare Displays, bei denen die beidseitige Ablesbarkeit dadurch erreicht ist, dass die in eine erste und in zur ersten entgegengesetzten Richtung sichtbaren Bildpunkte zumindest zeilen- oder spaltenweise ineinandergefügt (interleaved) angeordnet werden. Der Nachteil hierbei ist, dass die Auflösung gegenüber einer ansonsten mit gleicher Fertigungstechnik möglichen Displayauflösung um den Faktor 2 reduziert ist. Weiterhin können sich die Rückseiten der in die jeweils andere Richtung gerichteten Bildpunkte als den Seheindruck störende Streifen bemerkbar machen. Zudem werden entweder zur Hinterleuchtung der einen Display-Matrix auf beiden Seiten je ein Hinterleuchtungselement benötigt, oder, in der transflektierenden Ausführungsform, bei der nur eine Hinterleuchtung auf einer Seite ausreicht, ist die Helligkeit des Displays

Zuletzt offenbart auch die Veröffentlichungsschrift EP3015915A1 des Anmelders eine beidseitig ablesbare Anzeigevorrichtung. Diese ist jedoch nur in der Lage, auf beiden Seiten die gleiche Information anzuzeigen, und weiterhin auch nicht in der Lage, eine Helligkeitseinstellung für beide Displays getrennt durchzuführen.

Die Veröffentlichungsschrift US 2015/0301779 A1 beschreibt eine Anzeigevorrichtung mit zwei Displays, welche mit einander zugewandten Lichtempfangsoberflächen beabstandet zueinander angeordnet sind, wobei eine gemeinsame Hinterleuchtungseinheit mit einer Lichtleitplatte im Zwischenraum positioniert ist. Diese ist mittels zweier unabhängig voneinander schaltbarer, Licht mit zueinander orthogonalen Polarisationen aussendender Lichtquellen ausgestattet, welche jeweils der Polarisationsrichtung zweier zwischen der Hinterleuchtungseinheit und den Displays angeordneter Polarisationsfiltern entspricht. Da die Polarisationen des von den beiden Lichtquellen ausgesandten Lichts bei der Streuung innerhalb der Lichtleitplatte erhalten bleiben, ist die Hinterleuchtungseinheit in der Lage, das Licht jeder der Lichtquellen jeweils gezielt nur einem bestimmten Display zuzuführen und so die Helligkeit der Displays unabhängig voneinander zu steuern.

Die Patentschrift US 7,223,007 B1 offenbart eine Vorrichtung zur optimierten Hinterleuchtung eines Multi-Display Gerätes. Zwei Rücken-an-Rücken und beabstandet parallel zueinander angeordnete LCD Displays weisen ein zwischenliegendes Hinterleuchtungselement aus Lichtquellen und einer Lichtleitplatte mit zwei auf gegenüberliegenden Seiten angeordneten schaltbaren bistabilen klar/reflektiven Schichten. Mittels der schaltbaren Schichten ist es möglich, das Licht der Lichtquellen zur Hinterleuchtung nur eines oder auch beider LCD-Displays zu verwenden. Eine unabhängige Einstellung der Helligkeit beider Displays ist hier nicht ermöglicht.

Die Veröffentlichungsschrift US 2004/0223343 A1 schlägt ein plattenförmiges Hinterleuchtungsmodul mit zwei auf gegenüberliegenden Seiten angebrachten LCD Displays und stirnseitig angeordneten Lampen vor, welche auch einer bestimmten Seite und damit einem der Displays zugeordnet sein können.

In der Veröffentlichungsschrift US 2007/0064173 A1 ist ein doppelseitiges LCD display beschrieben, welches zur Hinterleuchtung ein Modul aus in entgegengesetzte Richtungen emittierenden, al ternierend angeordneten organischen Leuchtdioden (oLEDs) aufweist.

Die Veröffentlichungsschrift US 2007/0139966 A1 beschreibt ein Hinterleuchtungselement und ein damit ausgestatte Anzeigevorrichtung, wobei das Hinterleuchtungselement eine Lichtleitplatte umfasst auf deren Oberfläche Reflektorpunkte aufgedruckt sind. deren Größe mit ihrem Abstand zu einer Lichteinstrahlseite zunimmt. Der Abstand benachbarter Reflektorpunkte bleibt hierbei konstant.

Die Veröffentlichungsschrift WO 2011/055847 A1 zeigt eine Anzeigevorrichtung mit einem Hinterleuchtungselement, welches eine Lichtleitplatte mit beidseitig rastartig aufgedruckten Reflektorpunkten aufweist, wobei die Reflektorpunkte auf beiden Seiten einen relativen Versatz aufweisen und die Größe der Reflektorpunkte von gegenüberliegenden Seiten zur Mitte der Lichtleitplatte hin zunimmt, wobei alle Reflektorpunkte in einer Zeile des Rasters die gleiche Größe aufweisen. Da der Abstand benachbarter Zeilen und Spalten des Rasters konstant ist, nimmt entsprechend der Abstand benachbarter Punkte zur Mitte der Lichtleitplatte hin zu. Vor diesem Hintergrund hat sich vorliegende Erfindung die Aufgabe gestellt, einen beidseitig betrachtbaren Bildschirm zu konstruieren, der auf den gegenüberliegenden Seiten unterschiedliche Informationen anzeigen kann, möglichst wenig Energie zur Hinterleuchtung aufwendet und bei dem die Helligkeitseinstellung für beide Seiten separat regelbar ist, wobei der Bildschirm trotzdem eine möglichst geringe Dicke aufweisen soll.

Als Lösung präsentiert vorliegende Erfindung einen doppelseitigen Bildschirm gemäß des Anspruchs 1, welcher durch das Verfahren gemäß Anspruch 12 hergestellt wird.

Als wesentliche Maßnahme zur Lösung der zugrundeliegenden Aufgabe sieht vorliegende Erfindung den Einsatz zweier MatrixDisplays vor, insbesondere TFT-Matrix-Displays, die mit miteinander zugewandter Rückseite zueinander beabstandet angeordnet sind, wobei in dem entstehenden Zwischenraum ein flächiges Hinterleuchtungselement eingebracht ist, welches insbesondere den Zwischenraum vollständig ausfüllt. Das Hinterleuchtungselement ist zur gesteuerten Lichtabgabe in zwei entgegengesetzte Richtungen, vorzugsweise zumindest die Hauptbetrachtungsrichtung der jeweiligen Displays, fähig.

Als Hauptbetrachtungsrichtungen sind in diesem Zusammenhang diejenigen Richtungen, aus denen ein Benutzer beziehungsweise Betrachter des Displays üblicherweise auf das Display blickt. Bei einem einseitig betrachtbaren Bildschirm oder Laptopdisplay ist dies üblicherweise die Flächennormale. Bei einem zweiseitig betrachtbaren Bildschirm gemäß vorliegender Erfindung kann dies jedoch davon abweichen. Da zwei Betrachter gleichzeitig das Display betrachten können sollen, und Displays beim Einsatz in Laptops oder Computern üblicherweise leicht unterhalb der Kopfhöhe der Betrachter positioniert sind, ist der erfindungsgemäße doppelseitige Bildschirm unter Umständen so zu konstruieren, dass die Hauptbetrachtungsrichtung deutlich von der Flächennormalen nach oben hin abweicht.

Alternativ ist es auch möglich, dass die beiden Matrix-Displays, welche entweder eben oder in eine oder auch in zwei Richtungen gekrümmt sein können, nicht parallel zueinander ausgerichtet sind, sondern einen gewissen Winkel zueinander aufweisen. Bei ebenen Displays findet man diesen Winkel einfach als Winkel zwischen den beiden Flächen. Bei in einer oder zwei Richtungen gekrümmten Displays ist der hier angesprochene Winkel, der Winkel zwischen den Durchschnittsrichtungen der jeweiligen Displays. Die Durchschnittsrichtung eines Displays findet man durch gewichtete Integration der Flächennormalen infinitesimaler Flächenelemente. Da nur die Richtung, im Sinne eines Einheitsvektors, von Interesse ist, erübrigt sich eine Division durch die Gesamtfläche des Displays.

Die wichtigste Eigenschaft des Hinterleuchtungselements des erfindungsgemäßen doppelseitigen Bildschirms ist die gesteuerte Lichtabgabe in zwei entgegengesetzte Richtungen. Wie zuvor erläutert, sollte dies zumindest die Hauptbetrachtungsrichtungen umfassen. Damit die auf dem jeweiligen Display angezeigte Information jedoch auch aus anderen Richtungen lesbar ist, sollte eine, möglichst isotrope Lichtabgabe in einen dieser Hauptbetrachtungsrichtung enthaltenden Kegel erfolgen. Erreicht der Öffnungswinkel dieses Kegels 180 Grad, so erfolgt Lichtabgabe in den kompletten Halbraum. Ein derart großer Öffnungswinkel ist jedoch nicht unbedingt erforderlich, da bei den bevorzugt eingesetzten TFT-Matrix-Displays die Begrenzung des Betrachtungswinkels durch die Lichtablenkung der im Display verwendeten Flüssigkristalle gegeben ist. Licht, was unter einem höheren Winkel auf die Kristalle trifft wird teilweise reflektiert, teilweise aber auch absorbiert. Um Energie zu sparen schlägt vorliegende Erfindung darum vor, die Lichtemission auf Winkel relativ zur Hauptbetrachtungsrichtung zu begrenzen, welche dem maximalen Lichtdurchtrittswinkel durch die LCD Kristalle der Bildpunkte entsprechen.

Das Hinterleuchtungselement wird dadurch realisiert, dass an eine Lichtleitplatte aus weitgehend transparentem, beziehungsweise diffus transmittierendem, Material an zwei gegenüberliegenden, Stirnseiten LED-Leuchtelemente angebracht werden, die Licht in die Platte hinein abgeben, welches dann möglichst homogen und isotrop auf den flächigen Seiten der Lichtleitplatte austritt. Zur Verbesserung der isotropen Lichtabgabe kann auf einer oder auf beiden flächigen Seiten der Lichtleitplatte zusätzlich eine Diffusorschicht aufgebracht sein oder zwischen dem Hinterleuchtungselement und dem Display als Folie ein transflektiver Diffusor und/ oder eine lichtverstärkende Folie mit transflektiven Eigenschaften eingebaut werden. Transflektiv' bedeutet, dass ein Teil des Lichtes transmittiert, ein anderer reflektiert wird. Die Relation dieser beiden, im Allgemeinen vom Inzidenzwinkel abhängigen Anteile zueinander bestimmt unter anderem darüber, wie gleichmäßig und effizient das Licht aus dem Hinterleuchtungselement austritt.

Lichtverstärkende Folien sind bekannt und bestehen üblicherweise aus einer transparenten Schicht mit regelmäßig angeordneten, pyramidenartigen Strukturen auf der Oberfläche. Falls eine beidseitig glatte Oberfläche gewünscht ist, können auch zwei solche Schichten oder Folien mit den Pyramiden lückenlos ineinander verzahnt zusammengesetzt werden, wobei zumindest die Pyramiden- oder Linsenstrukturen der beiden Folien unterschiedliche optischen Dichten aufweisen. Alternativ kann die lichtverstärkende Pyramiden- bzw. Linsenstruktur auch in die Oberfläche des Materials der Lichtleitplatte selbst eingeformt oder aufgetragen werden. Damit es nicht zur Totalreflexion der von innen auf die Oberfläche der Lichtleitplatte treffenden Lichtstrahlen kommt, werden erfindungsgemäß auf beiden Seiten Reflektorpunkte versetzt auf bzw. in die Oberfläche gedruckt bzw. geformt. Diese sorgen dafür, das auftreffende Lichtstrahlen so abgelenkt werden, dass sie vermehrt auf der gegenüberliegenden Seite die Lichtleitplatte verlassen können. Die Reflektorpunkte sind zur vereinfachten Herstellung rasterartig angeordnet, was auch den zwischen Vorder- und Rückseite nötigen Versatz in x- und/oder y-Richtung erleichtert. Um den, in etwa linearen, Abfall der Leuchtdichte zur Mitte der Lichtleitplatte oder seitwärts von dem LED-Leuchtelement hin zu kompensieren und eine homogene Austrittsleuchtdichte zu erreichen, wird der Abstand zwischen benachbarten Zeilen des Rasters der Reflektorpunkte zur Mitte der Platte hin verringert, wobei der Spaltenabstand konstant ist.

Durch Dichte und Größe der Reflektorpunkte auf beiden Seiten der Lichtleitplatte kann die austretende Leuchtdichte vorteilhaft beeinflusst werden. Beispielsweise können auf der Vorderseite mehr und/oder größere Reflektorpunkte verwendet werden, als auf der Rückseite. Dadurch ist die austretende Leuchtdichte auf der Rückseite größer als auf der Vorderseite. Hierdurch ist ein beidseitig ablesbares Display geschaffen, welches zum Einsatz in Scheiben zwischen zwei Bereichen unterschiedlicher Helligkeit, etwa einem Innen- und einem Außenbereich, besonders geeignet ist.

Eine gesteuerte Abgabe in die entgegengesetzten Richtungen ist hierbei durch Verwendung von unabhängig voneinander steuerbaren LED-Leuchtelementen in Verbindung mit in der Lichtleitplatte vorhandenen Maßnahmen zur direktionalen Lichtablenkung erreicht. Diese Maßnahmen können darin bestehen, dass in bzw. auf der Platte ein oder mehrere lichtreflektierende Elemente vorhanden sind, die dafür sorgen, dass das Licht einer LED-Lichtquelle nur auf einer Seite austritt, sodass jede der flächigen Seiten der Lichtleitplatte nur Licht aus einer der LED-Lichtquellen emittiert. Soll trotzdem noch eine Transparenz der Lichtleitplatte gewährleistet sein, so können mehrere transparente Reflektorelemente eingesetzt sein, deren Flächennormale relativ zur Hauptbetrachtungsrichtung einen Winkel von etwas weniger beziehungsweise mehr als 90 Grad einnimmt, und die genügend voneinander beabstandet sind, sodass aus Sicht der Hauptbetrachtungsrichtung nur ein Bruchteil der Gesamtfläche der Lichtleitplatte von den Reflektorelementen verdeckt wird. Alternativ kann auch nur ein einziges, aber semi-transparentes Reflektorelement verwendet werden.

Eine andere, nicht anspruchsgemäße, Möglichkeit, die Lichtabgabe des erfindungsgemäßen Leuchtelements in zwei entgegengesetzte Richtungen zu realisieren, besteht darin, das Hinterleuchtungselement als ein transparentes oder ein zweischichtiges oLED-Element auszuführen. Dabei wird eine transparente oLED zwischen beiden Displays eingebaut oder es werden zwei flächige oLEDs von der Größe des Displays miteinander flächig verbunden, eventuell unter Verwendung einer intransparenten Zwischenschicht. Jede der beiden OLED-Elemente wäre dann für die Hinterleuchtung je eines Displays zuständig, wobei eine Querbeleuchtung durch die Trennschicht wirksam verhindert würde. Der Vorteil ist ein im Prinzip vereinfachter Aufbau gegenüber der zuvor beschriebenen Lösung, sowie eine noch geringere Dicke, da oLED-Leuchtelemente sehr dünn, in der Größenordnung von einem Millimeter, ausgeführt werden können. Unter Berücksichtigung der intransparenten Trennschicht ergäbe sich eine Gesamtdicke von 2-3 Millimetern. Der Nachteil, dass durch die Verwendung von zwei oLED Elementen der resultierende beidseitig ablesbare Bildschirm aufgrund der intransparenten Trennschicht undurchsichtig wäre ist bei der Verwendung einer transparenten, flächigen oLED als Leuchtelement nicht gegeben.

Eine weitere nicht anspruchsgemäße Variante der beidseitig unabhängigen Steuerung der Displayleuchtdichte bzw. Helligkeit sieht vor, das Hinterleuchtungselement aus einem einzelnen, flächigen, entsprechend leistungsfähigeren, auf beiden Seiten Licht abgebenden LED oder oLED-Leuchtelement aufzubauen, welches zwischen zwei in ihrer Transparenz steuerbaren Scheiben, zum Beispiel Smartglass, sandwichartig eingeschlossen ist. Das LED/ oLED-Leuchtelement emittiert hierbei idealerweise Licht auf beiden Seiten in gleicher Stärke, Homogenität sowie Isotropie. Wenn nun auf den beiden Displays unterschiedliche Helligkeitseinstellungen realisiert werden sollen, so wird diejenige steuerbare Scheibe, die dem helleren der beiden Displays zugeordnet ist, auf vollständige Transparenz geschaltet, und das LED/oLED-Leuchtelement zur entsprechenden Lichtabgabe stimuliert. Die steuerbare Scheibe des dunkleren Displays wird dabei nur auf einen niedrigeren Transmissionswert eingestellt. Sind die steuerbaren Scheiben bei Intransparenz zumindest teilweise reflektierend, kann vorteilhafterweise die zur Anregung des LED/oLED-Leuchtelements verwendete Leistung noch weiter reduziert werden, da ein Teil des in Richtung des dunkleren Displays abgegebene Lichtes durch Reflektion an der auf semi-transparent geschalteten Scheibe schließlich auch zur Hinterleuchtung des helleren Displays beiträgt. Die erreichbaren Dicken des Hinterleuchtungselementes sind hierbei höher als bei der Version aus zweiflächigen OLED-Elementen mit intransparenter Zwischenschicht, jedoch ist es möglich, den Bildschirm wenigstens teilweise durchsichtig zu machen, indem nämlich beide steuerbare Scheiben auf vollständig transmittierend geschaltet werden.

Die Herstellung des erfindungsgemäßen doppelseitig betrachtbaren Bildschirms umfasst das Bereitstellen der Displays sowie des Hinterleuchtungselementes und Zusammenfügen zu einem Stapel, bei dem Matrix-Displays mit ihrer Rückseite einander zugewandt auf das Hinterleuchtungselement aufgelegt werden. Die drei Komponenten werden dann entweder Bild eines Rahmens stabilisiert oder zwischen zwei beabstandeten transparenten Scheiben angebracht, wo sie durch Anpressdruck zusammengehalten werden. Es ist jedoch zusätzlich möglich, die MatrixDisplays mit den Scheiben klebend zu verbinden, insbesondere bevorzugt durch Verwendung einer kombinierten Antireflex- und Bindeschicht.

Eine erfindungsgemäße Verwendung des erfindungsgemäßen doppelseitigen Bildschirmes sieht vor, dass entweder auf beiden Seiten die gleiche Information angezeigt wird, oder aber unterschiedliche Informationen in Form von Text, oder auch Bildern, sowohl bewegt oder statisch, dargestellt wird. Die Helligkeitseinstellung jedes der Displays ist hierbei durch oben beschriebene Ausgestaltung des gemeinsamen Hinterleuchtungselementes und/oder Regelung der Transparenz eines Displays unabhängig vom jeweils anderen regelbar.

Die Vorteile des erfindungsgemäßen doppelseitig betrachtbaren Bildschirms sind darin zu sehen, dass im Vergleich zur Verwendung von zwei unabhängigen Bildschirmen ein wesentlich verringerter Flächenverbrauch und Energieverbrauch erreicht ist. Im Vergleich zu aus dem Stand der Technik bekannten beidseitig lesbaren Bildschirmen ist durch den Einsatz eines gemeinsamen Hinterleuchtungselementes für beide Displays, welches in seiner gerichteten Lichtabgabe in zwei entgegengesetzte Richtungen steuerbar ist, erreicht, dass beide Displays tatsächlich in jeder Hinsicht unabhängig voneinander angesteuert werden können. Die beidseitige Ablesbarkeit bedeutet hier nicht nur, dass die auf einem Matrix-Display dargestellte Information aus beiden Richtungen sichtbar beziehungsweise betrachtbar ist, wobei ja bei Verwendung nur eines Displays unweigerlich eine spiegelverkehrte Anzeige aus einer der Richtungen verbunden wäre, sondern dass die gleiche Information spiegelsymmetrisch korrekt auf beiden Seiten darstellbar ist oder aber auch komplett unterschiedliche Informationen, das heißt, Texte, Bilder oder Ähnliches, darstellbar sind. Getrennte Einstellbarkeit der Helligkeit, wie von vorliegender Erfindung vorteilhaft ermöglicht, ist deshalb von Relevanz, da auf beiden Seiten des Bildschirms unterschiedliche Lichtverhältnisse herrschen können. Dies ist mit im Stand der Technik bekannten beidseitig ablesbaren Bildschirmen nicht auszugleichen, und wird erst durch vorliegende Erfindung gelöst.

So ermöglicht es ein in einen Laptop oder Computerbildschirm integrierter erfindungsgemäßer beidseitig ablesbarer Bildschirm als konkrete Anwendung beispielsweise bei Meetings gemeinsam eine Präsentation zu betrachten, ohne dass man sich dazu nebeneinander setzen müsste, was in Situationen, in denen eine gewisse Distanz gewahrt werden soll, unangenehm sein mag. Eine andere, möglicherweise noch etwas andere Anwendung in diesem Zusammenhang ist es, auf beiden Displays grundsätzlich das Gleiche, aber auf einem der Displays zusätzliche Informationen anzuzeigen. So kann zum Beispiel ein Verkäufer ein Angebot für einen Kunden zusammenstellen, welches dieser auf dem vom Verkäufer aus gesehenen rückseitigen Display angezeigt bekommt, wobei aber nicht alle für den Verkäufer sichtbaren Informationen auch dem Kunden angezeigt werden. Eine andere denkbare Verwendung ist das gemeinsame Durchführen von Computerspielen, bei dem mit nur einem Computer nun zwei Spieler teilnehmen können und dabei miteinander oder gegeneinander antreten.

Außerhalb von PCs, Laptops oder auch mobilen Geräten wie Smartphones oder Tablets können doppelseitige Displays auch vorteilhaft als Anzeigeelement in Fahrzeugen verwendet werden. So zum Beispiel in den Fenstern von Bussen oder Zügen, um etwa Werbe- oder Reiseinformationen anzuzeigen. Wird das Display im Außenfenster eingebaut, können sowohl die Insassen als auch außenstehende Personen dies betrachten. Auch bei Verwendung im Inneren des Fahrzeugs, zum Beispiel in einer Abteiltür oder einem Abteilfenster, können mehrere Insassen davon profitieren. Der Vorteil des erfindungsgemäßen doppelseitigen Bildschirms im Vergleich zur Verwendung von zwei unabhängigen Bildschirmen ist eine Energieeinsparung von bis zu 50%, Einsparung an Gewicht, geringere Gesamtdicke sowie der wesentlich verringerte Flächenbedarf und ein damit einhergehender Gewinn an Übersichtlichkeit und Ästhetik.

Vorteilhafte Weiterbildung vorliegender Erfindung, welche einzeln und gegenseitig offensichtlich ausschließen, sollen im Folgenden vorgestellt werden.

Die Ausrichtung der beiden flächigen Matrix-Displays vorliegender Erfindung zueinander kann entweder parallel oder nicht parallel erfolgen. Parallele Ausrichtung ist, besonders bei ebenen Displays, deshalb vorteilhaft, weil eine minimale Dicke des resultierenden Bildschirms erreicht wird. Eine nicht parallele Ausrichtung, bezogen auf die Durchschnittsrichtung jedes Displays, welche wie, eine Anpassung an nicht-kollineare Hauptbetrachtungsrichtungen zu ermöglichen. Dieser Fall kann insbesondere bei der Verwendung des erfindungsgemäßen beidseitig betrachtbaren Bildschirms als Laptop- und/oder PC-Bildschirm auftreten. Dort kommt es häufig vor, dass der Bildschirm im Vergleich zu den Augen des Betrachters nach unten versetzt positioniert ist, dass jeder der Betrachter von schräg oben auf die jeweilige Seite des Bildschirms schaut. Bei paralleler Ausrichtung der beiden Displays müssten entweder beide einen suboptimalen Seheindruck in Kauf nehmen, oder diese von der Flächennormalen abweichende Hauptbetrachtungsrichtung wird durch entsprechende Ausrichtung der Flüssigkristallelemente des TFT-Matrix-Bildschirms. Dies setzt voraus, dass man den TFT-Matrix-Bildschirm entsprechend auf diese Anwendung optimiert, was aufwendig ist und entsprechende technische Möglichkeiten voraussetzt. Sind nur übliche, auf Betrachtungsausrichtung der Flächennormalen hin optimierte MatrixDisplays vorhanden, so ist eine nicht-parallele Ausrichtung der M-Displays die einzige Lösung.

Das erfindungsgemäße Hinterleuchtungselement kann entweder aufgebaut sein aus einer Lichtleitplatte mit bevorzugt an gegenüberliegenden Stirnseiten angebrachten LED-Leuchtelementen, insbesondere LED-Leuchtschienen. Die Lichtleitplatte wäre hierbei weitestgehend transmittierend, bevorzugt diffus transmittierend, um einen homogenen und isotropen Lichtaustritt sicherzustellen. In der Lichtleitplatte sind bevorzugt Reflektorelemente vorhanden, welche dem vom Leuchtelementen her kommende Licht in direktionaler Ablenkung aufbringen, sodass das auf einer der flächigen Seiten der Lichtleitplatte austretende Licht zum Großteil oder sogar vollständig von einer der beiden LED-Leuchtelementen stammt.

Alternativ kann das Hinterleuchtungselement eines nicht anspruchsgemäßen doppelseitigen Bildschirms auch als transparentes oder zweischichtiges flächiges oLED-Hinterleuchtungselement ausgeführt sein, bei dem ein oder zwei flächige OLED-Leuchtelemente eventuell mit einer intransparenten Zwischenschicht getrennt aneinandergesetzt sind. Die Lichtversorgung jedes der beiden Displays erfolgte dabei durch jeweils eine der oLED-Schichten.

Vorteil des zweischichtigen OLED-Elementes ist eine geringe Bautiefe. Der Nachteil der Intransparenz kann jedoch durch Verwendung eines transparenten oLED-Leuchtelements oder dadurch ausgeglichen werden, dass als intransparente Zwischenschicht eine in ihrer Transparenz bzw. Transmittivität schaltbare Platte verwendet wird. Soll der Bildschirm als Ganzes transparent werden, so wird einfach diese Schicht auf maximal mögliche Transparenz geschaltet. Im normalen Betrieb wäre es jedoch auf die Transparenz bzw. reflektierend geschalten.

Es ist auch möglich, diese dreischichtige Struktur aus außen jeweils einem OLED-Leuchtelement und innen einer in ihrer Transparenz schaltbaren Scheibe zu invertieren, d. h. außen jeweils eine in ihrer Transparenz schaltbare Scheibe mit einem möglicherweise leistungsstärkeren oLED-Leuchtelement dazwischen vorzusehen.

Insbesondere bei letzterer Ausführungsform ist es auch möglich, statt eines einfach nur weißen OLED-Leuchtelementes, ein vollwertiges OLED-Matrixdisplay zu verwenden. Dadurch würden neuartige Effekte ermöglicht, die bisher kein anderes Display darzustellen im Stande ist. Durch gleichzeitige Anzeige von Informationen auf zwei oder sogar drei der Matrixdisplays die Möglichkeit zum Beispiel holographische oder 3D-Effekte zu realisieren.

Bevorzugt wird der Stapel aus Matrixdisplays und Hinterleuchtungselement entweder durch einen Rahmen zusammengehalten oder aber durch den Anpressdruck zweier Scheiben stabilisiert. Die Anbringung kann auch zusätzlich zum Anpressdruck noch eine Verklebung mit den Scheiben erfolgen. Bevorzugt wird hierfür eine kiombinierte Anti-Reflex und -Bonding Schicht auf der Außenseite bzw. Vorderseite jedes der Matrixdisplays aufgebracht und mit den äußeren Scheiben verbunden.

Die Einstellungen der Helligkeitswerte der einzelnen Displays können auch bevorzugt durch eine Kombination aus Anpassungen der Transparenz jedes Displays und der Hinterleuchtung des Displays erreicht werden. Um eine möglichst Energiesparende Anzeige zu erreichen, würde hierbei die Transparenz des Displays soweit wie möglich erhöht und die Hinterleuchtung entsprechend reduziert.

Als Matrixdisplays in dem erfindungsgemäßen durchleuchtbaren Bildschirm werden bevorzugt TFT Matrix Displays eingesetzt. Auf die Vorderseite jedes Displays wird weiterhin bevorzugt eine AntiReflex Beschichtung aufgebracht, welche auch gleichzeitig als Bindeschicht an eine auf der Vorderseite des Matrixdisplays aufgelegten Scheibe dient.

Weitere Einzelheiten, Merkmale und Vorteile vorliegender Erfindung erben sich aus den im Folgenden anhand der Figuren der erläuterten Ausführungsbeispiele. Diese dienen nur der Erfindungsidee und sollen diese in keiner Weise einschränken.

Es zeigen im Einzelnen:
Figur 1: Perspektivische Ansicht eines erfindungsgemäßen zweiseitig betrachtbaren Bildschirms zwischen zwei Scheiben
Figur 2: In drei Teilfiguren drei mögliche Realisierungen eines Hinterleuchtungselements mit direktionaler Lichtabgabe
Figur 3: Ein Querschnitt durch eine bevorzugte, zwischen zwei Scheiben eingebrachte Ausführungsform des beidseitig ablesbaren Bildschirms
Figur 4: Eine schematische Draufsicht einer Ausführungsform einer erfindungsgemäßen Lichtleitplatte mit aufgedruckten Reflektorpunkten.

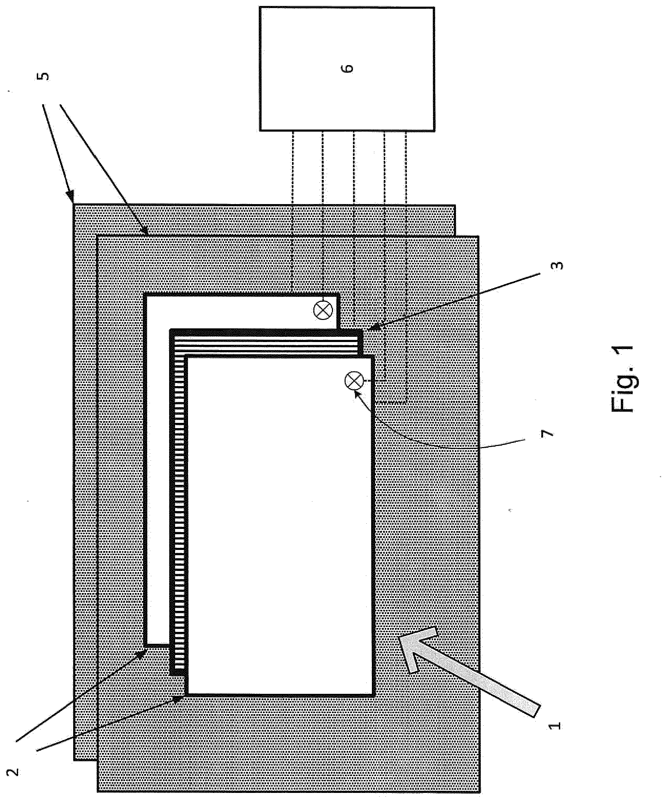

**Figur 1** zeigt eine perspektivische Ansicht einer bevorzugten Ausführungsform des erfindungsgemäßen beidseitig ablesbaren Bildschirms, welcher zwischen zwei Scheiben gehalten ist. Kernstück des Bildschirms 1 bildet der Stapel aus zwei ebenen Matrixdis-
plays, insbesondere TFT-Displays, welche parallel zueinander und beabstandet voneinander angeordnet sind und zwischen sich möglichst lückenlos das Hinterleuchtungselement 3 einschließen. Der Stapel ist zwischen zwei Scheiben 5 durch Druck und/oder zusätzlicher Verklebung mittels einer Bonding-Schicht 4, welche bevorzugt zusätzlich als Anti-Reflektionsschicht wirkt, gehalten. Auf jeder Seite des doppelseitigen Bildschirms 1 ist ein Lichtsensor 7 zur Messung der dortigen Umgebungshelligkeit bzw. Umgebungsleuchtdichte vorhanden, welche zur automatischen Anpassung der jeweiligen Displayhelligkeit dient. Vom Hinterleuchtungselement 3, den Lichtsensoren 7 und den Displays 2 gehen Steuer- und Stromleitungen 15 zu einem Controller, insbesondere einem PC oder anderweitigen Datenverarbeitungsgerät 6.

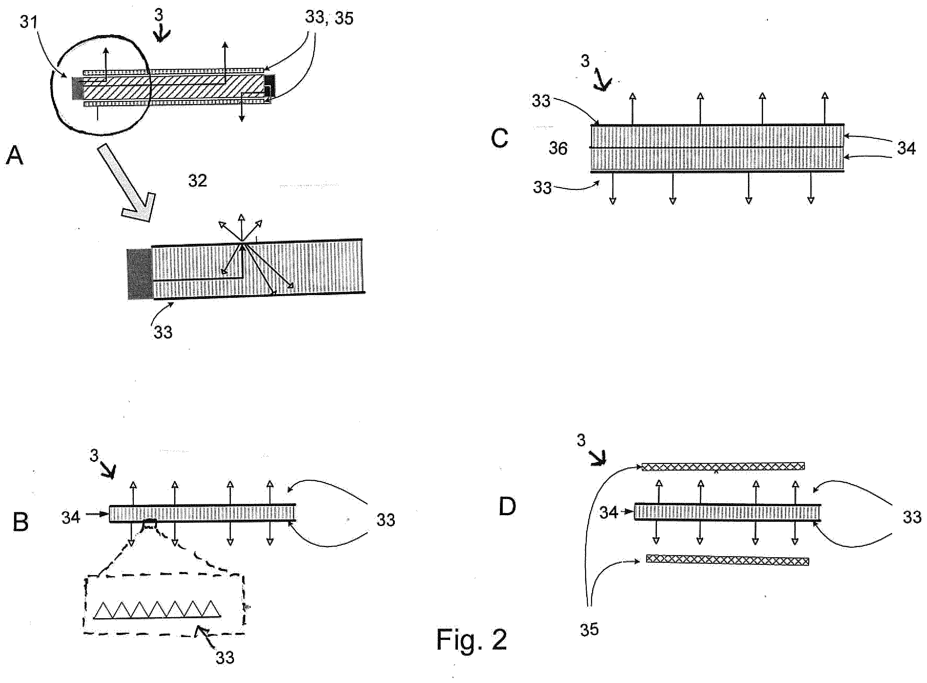

Figur 2 zeigt in 4 Teilfiguren schematische Schnittzeichnungen durch mögliche Realisierung eines Hinterleuchtungselements mit direktionaler Lichtabgabe.

Teilfigur A zeigt ein Hinterleuchtungselement 3, welches aus einer Lichtleitplatte 30 und an gegenüberliegenden Stirnseiten derselben angebrachten LED-Leuchtelementen 31 aufgebaut ist. Zwischen den Außenflächen der Lichtleitplatte 30 und der Rückseite jedes der Displays 2 sind je eine Transflektorschicht 33 eingebracht, um das Licht in Richtung Display zu lenken und diffus zu verteilen. Diese Funktion kann auch oder zusätzlichim Inneren der Lichtteilplatte durch versetzt angeordnete Reflektorelemente 32 realisiert werden, welche für eine Direktionalität des von den LED-Leuchtelementen 31 des abgegeben Lichts sorgen. Wie durch die Pfeile angedeutet, wird das von einer Lichtquelle 31 emittierte Licht bevorzugt in eine Richtung abgelenkt, sodass auf einer Seite der Lichtleitplatte 30 bzw. des Hinterleuchtungselementes 3 austretende Licht zum Großteil oder vollständig von nur einer der LED-Lichtquellen 31 stammt. Dadurch ist es möglich, die Hinterleuchtung der Matrix-Displays des beidseitig ablesbaren Bildschirms unabhängig oder weitgehend unabhängig voneinander steuern, indem die Lichtabgabe der beiden LED-Leuchtelemente 31 unabhängig voneinander gesteuert wird. Ein Detailausschnitt des eingekreisten Bereichs illustriert die transflektierende Wirkung der Beschichtung 33. Das durch Reflektorstruktur 32 bevorzugt oder ausschließlich in eine Richtung abgelenkte Licht wird an der Schicht 33 teilweise transmittiert und teilweise reflektiert. Letzteres trägt zu einer Homogenisierung der Ausleuchtung über die Fläche des Hinterleuchtungselementes bei, arbeitet jedoch andererseits der durch die Reflektorstruktur aufgeprägten Direktionalität entgegen. Insofern ist auf einen angemessenen Kompromiss zu achten und die Reflektivität der Schicht 33 gegenüber der Transmissivität nicht zu hoch zu wählen.

Teilfigur B zeigt einen Querschnitt durch eine weitere Ausführungsform eines Hinterleuchtungselementes 3 und zwar als eine transparente, flächige oLED 34 mit beidseitig aufgebrachten Lichtverstärkungsschichten 33 aus regelmäßig angeordneten Pyramidenstrukturen, welche in einem Detailausschnitt vergrößert dargestellt sind. Durch die pyramidenartige Struktur wird das austretende Licht zum Display hin fokussiert, so dass das Licht nur unter Winkeln austritt, bei denen die LCD-Kristalle der Displays noch ausreichend durchlässig sind. Dies ist eine weitere Maßnahme die Lichtausnutzung zu optimieren und dadurch den Energieverbrauch bei gegebener/gewünschter Helligkeit zu minimieren.

In dem in Teilfigur C dargestellten Hinterleuchtungselement 3 sind zwei nicht notwendig transparente, flächige oLEDs 34 eingesetzt, die beide jeweils unabhängig voneinander steuerbarsind und durch eine Trennschicht 35 voneinander separiert sind. Trennschicht 35 ist entweder ein intransparentes Material, oder aber bevorzugt, ein in seiner Transparenz bzw. Transmissivität steuerbares Material, insbesondere beispielsweise Smart Glass. Wie bei der ersten Variante ist auf beiden Außenseiten eine Lichtverstärkende Schicht 33 aufgebracht.

Teilfigur D zeigt einen Querschnitt durch eine Ausführungsform des Hinterleuchtungselements 3 ähnlich der in Teilfigur C gezeigten. Hier besteht das Element aus einem Aufbau mit drei Hauptschichten. Die äußeren beiden Schichten 35 werden durch je ein Smart-Window/Smart Glass gebildet, welches als Lichtventil dient. Die mittlere Schicht bildet ein flächiges Leuchtelement, insbesondere ein LED oder oLED-Leuchtelement. Die Steuerung der Lichtabgabe in die entgegengesetzten Richtungen erfolgt hierbei durch eine Kombination der Lichtabgabe des Leuchtelementes 34 und der Transmissivitätseinstellungen der jeweiligen Schicht 35. Zwischen Leuchtschicht 34 und Smart Window/Lichtventilschicht 35 kann noch eine Lichtverstärkungsschicht 33 eingebracht sein.

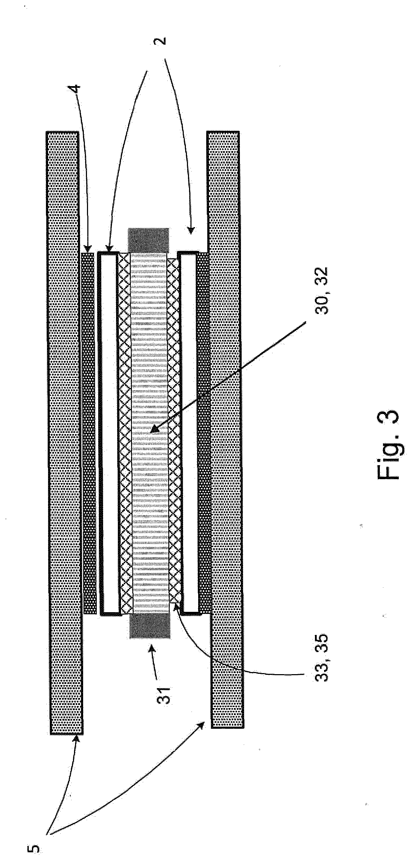

Figur 3 zeigt einen Querschnitt durch eine besonders bevorzugte Ausführungsform eines doppelseitig lesbaren Bildschirms gemäß vorliegender Erfindung. Zu erkennen ist ein spiegelsymmetrischer Aufbau aus insgesamt neun Schichten. Im Innern ist das Hinterleuchtungselement 3, welches selbst wiederum aus einer Lichtleitplatte 30 und an den Stirnseiten der Lichtleitplatte befestigten LED-Leuchtelementen 31 besteht. Auf der flächigen Seite der Lichtleitplatte 32 sind aufgebracht Diffusor-/Transflektor und/oder Lichtverstärkungsschichten 33 alleine oder in Verbindung mit einem in seiner Transparenz/Transmissivität steuerbaren Smart Window oder Smart Glass 35. Nach außen an die Smart Window-Schichten 35 schließen sich auf jeweils gegenüberliegenden Seiten des Hinterleuchtungselementes 3 die beiden Matrix-Displays 2 an. An der Außenseite bzw. der Vorderseite eines jedes der Matrix-Displays ist eine dünne Anti-Reflex Beschichtung 4 aufgebracht, welche gleichzeitig zur Herstellung einer gegebenen Verbindung mit den äußeren Scheiben 5 dient. Letztere dienen der mechanischen Stabilisierung des Bildschirms sowie dem Schutz gegen äußere Einflüsse.

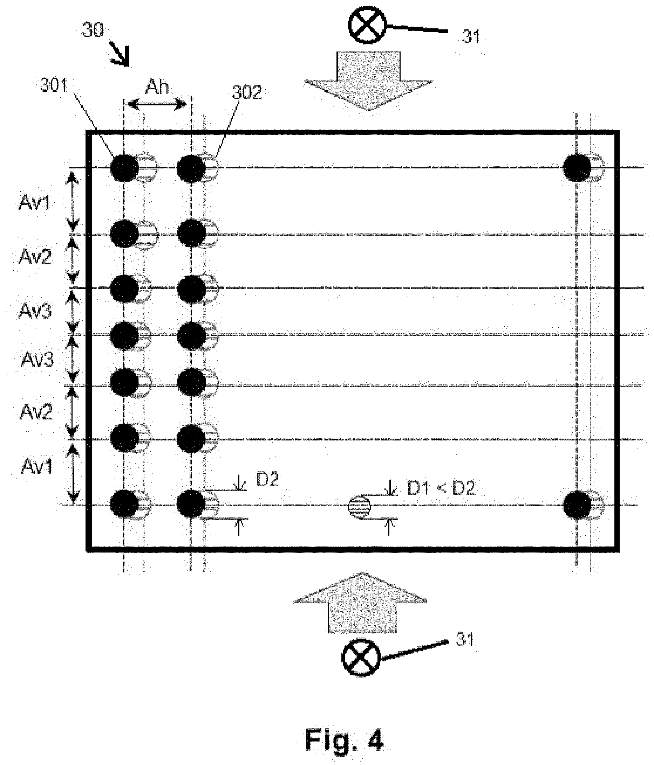

**Figur 4** zeigt in schematischer Draufsicht eine Ausführungsform einer erfindungsgemäßen Lichtleitplatte mit aufgedruckten Reflektorpunkten. Reflektorpunkte 301, 302 sind hierbei rasterartig auf Vorder- und Rückseite vorhanden, wobei zwischen den Positionen auf beiden Seiten ein leichter Versatz besteht, um den von der jeweils anderen Seite reflektierten Strahlen den Durchtritt zu ermöglichen. Um die Austrittsleuchtdichte trotz der bei Lichteinleitung des LED-Leuchtelements 31 an der Stirnseite, angedeutet durch die massiven Pfeile, zur Mitte des Displays bzw. der Lichtleitplatte konstant zu halten, sind die Reflektorpunkte zur Mitte hin dichter angeordnet. Dies wird erreicht, indem die Zeilenabstände Av1, Av2, Av3 zwischen den Reflektorpunkten zur Mitte hin reduziert werden, d.h. Av1 > Av2 > Av3. Der Spaltenabstand Ah wird dabei konstant gehalten. Um den im Inneren der Lichtleitplatte quer zur Lichteinstrahlrichtung von der Mitte zu den Rändern hin auftretenden Abfall der Leuchtdichte zu kompensieren, wird außer dem Zeilenabstand auch der Durchmesser der Reflektorpunkte reduziert. D.h. Durchmesser D1 eines Reflektorpunktes, der näher an der Mitte liegt, ist kleiner als Durchmesser D2 eines randwärtigen Reflektorpunktes. Bei geeigneter Wahl der Abhängigkeit von Durchmesser abhängig vom Abstand zur Mitte ist erreicht, dass die Austrittsleuchtdichte an den Rändern der in der Mitte entspricht.

### Bezugszeichenliste

- 1: Doppelseitiger Bildschirm
- 15: Strom- und Steuerleitungen
- 2: Matrixbildschirm
- 3: Hinterleuchtungselement
- 30: Lichtleitplatte
- 301: Reflektorpunkt auf Vorderseite
- 302: Reflektorpunkt auf Rückseite
- 31: LED Leuchtelement
- 32: Reflektorstruktur
- 33: Transflektor mit Diffusorfunktion
- 34: Flächiges oLED Leuchtelement
- 35: Smart Window
- 36: Trennschicht
- 4: Antireflex- u. Bonding-Schicht
- 5: Äußere Scheiben
- 6: Steuerung
- 7: Lichtsensor

- Ah: Reflektorpunkt-Spaltenabstand
- Av1: erster Reflektorpunkt Zeilenabstand
- Av2: zweiter Reflektorpunkt Zeilenabstand
- Av3: dritter Reflektorpunkt Zeilenabstand
- D1: erster ReflektorpunktdurchmesserD2 zweiter Reflektorpunktdurchmesser

## Patentansprüche

1. Doppelseitiger Bildschirm, umfassend:
- zwei flächige Displays (2) mit je einer Vorder- und einer Rückseite,
- ein Hinterleuchtungselement (3),
- wobei die Displays (2) mit einander zugewandter Rückseite beabstandet zueinander mit dem Hinterleuchtungselement (3) in dem durch die Displays definierten Zwischenraum angeordnet sind, und das Hinterleuchtungselement (3) zur gesteuerten Lichtabgabe in zwei entgegensetzte Richtungen fähig ist, und
- wobei das Hinterleuchtungselement eine Lichtleitplatte (30) mit zwei LED-Leuchtelementen (31) umfasst,
- wobei die Lichtleitplatte zwei einander gegenüberliegenden Stirnseiten und eine diese verbindende Vorderund Rückseite aufweist, und
- auf der Vorderseite und der Rückseite der Lichtleitplatte (30) Reflektorpunkte (301, 302) aufgedruckt oder aufgeformt sind, und
- die Reflektorpunkte (301, 302) auf der Vorder- und der Rückseite jeweils ein Raster mit quer zu einer Lichteinstrahlrichtung ausgerichteten Zeilen und parallel zu der Lichteinstrahlrichtung ausgerichteten Spalten bilden, wobei benachbarte Spalten der Raster der Reflektorpunkte (301, 302) einen konstanten Spaltenabstand (Ah) aufweisen, und das Raster der Reflektorpunkte (301) der Vorderseite und das Raster der Reflektorpunkte der Rückseite (302) zueinander vesetzt sind,
**dadurch gekennzeichnet, dass**
• an jeder der zwei gegenüberliegenden Stirnseiten je ein LED-Leuchtelement (31) vorhanden ist, und
• Zeilenabstände (Av1, Av2, Av3) zwischen benachbarten Zeilen der Raster der Reflektorpunkte (301, 302) zur Mitte der Lichtleitplatte (30), und somit zur Mitte des Displays (2), hin reduziert sind, und
• innerhalb einer Zeile ein Durchmesser (D1) eines Reflektorpunktes, der näher an der Mitte liegt, kleiner ist als ein Durchmesser (D2) eines randwärtigen Reflektorpunktes ,
sodass auf der Vorderseite und der Rückseite jeweils eine Austrittsleuchtdichte unter Berücksichtigung der Leuchtdichte und des Strahlungskegels der Leuchtelemente (31) über die Fläche konstant ist, wobei die Werte der Leuchtdichte auf auf der Vorderseite und der Rückseite der Lichtleitplatte (30) verschieden sein können.

2. Doppelseitiger Bildschirm nach dem vorhergehenden Anspruch, **dadurch gekennzeichnet, dass** auf der Vorderseite mehr und/oder größere Reflektorpunkte verwendet sind als auf der Rückseite.

3. Doppelseitiger Bildschirm nach einem der vorhergehenden Ansprüche, **dadurch gekennzeichnet, dass** das Display (2) und das Hinterleuchtungselement (3)
- durch einen Rahmen (4), und/oder
- durch zwei, den Stapel aus Displays und Hinterleuchtungselement zwischen sich einschließenden Scheiben
gehalten ist.

4. Doppelseitiger Bildschirm nach einem der vorhergehenden Ansprüche, **dadurch gekennzeichnet, dass** zwischen dem Hinterleuchtungselement (3) und mindestens einem der Displays (2) eine Diffusorschicht (33), insbesondere zwei, auf jeweils gegenüberliegenden Seiten des Hinterleuchtungselements (3) eingebaute Diffusorschichten (33), umfasst.

5. Doppelseitiger Bildschirm nach Anspruch 4, **dadurch gekennzeichnet, dass** die Diffusorschicht (33) transflektiv ausgeführt ist.

6. Doppelseitiger Bildschirm nach einem der Ansprüche 4 oder 5, **dadurch gekennzeichnet, dass** die Diffusorschicht aus auf der Oberfläche der Lichtleitplatte mechanisch oder chemisch angeformten Prismen oder Microlinsen besteht.

7. Doppelseitiger Bildschirm nach einem der vorhergehenden Ansprüche, **dadurch gekennzeichnet, dass** zwischen Hinterleuchtungselement (3) bzw. Diffusorschicht (33) und der Rückseite mindestens eines der Displays (2) lichtverstärkende Elemente (33) als Beschichtung oder als Folie vorhanden sind.

8. Doppelseitiger Bildschirm nach einem der vorhergehenden Ansprüche, **dadurch gekennzeichnet, dass** ein einem Display (2) zugeordneter, eine Umgebungsleuchtdichte messender Lichtsensor (7) vorhanden ist.

9. Doppelseitiger Bildschirms nach einem der vorhergehenden Ansprüche, **dadurch gekennzeichnet, dass** er dazu vorbereitet ist, dass
a) auf beiden Displays zugleich Informationen in Form von Text und/oder Bildern angezeigt werden kann, wobei die angezeigten Informationen auf beiden Displays gleich oder verschieden sein können, und
b) eine Helligkeitseinstellung für jedes Display separat vorgenommen werden kann.

10. Doppelseitiger Bildschirm nach dem vorhergehenden Anspruch, **dadurch gekennzeichnet, dass** er dazu vorbereitet ist, dass die Helligkeitseinstellung durch Anpassung der Displaytransparenz in die für das jeweilige Display maßgebliche Richtung eingestellt werden kann.

11. Doppelseitiger Bildschirms gemäß Anspruch 8 und einem der Ansprüche 9 oder 10, **dadurch gekennzeichnet, dass** er dazu vorbereitet ist, die Helligkeitseinstellung eines einem Lichtsensor (7) zugeordneten Displays (2) anhand einer vom Lichtsensor gemessen Umgebungsleuchtdichte automatisch anzupassen

12. Verfahren zur Herstellung eines doppelseitigen Bildschirms nach einem der Ansprüche 1-11,
**gekennzeichnet durch** die Schritte
i) Bereitstellen zweier flächiger Matrixdisplays mit je einer Vorder- und einer Rückseite, sowie eines Hinterleuchtungselementes (3),
ii) Aufeinanderlegen der Displays (2) und des Hinterleuchtungselements (3), sodass die Rückseite jedes Displays das Hinterleuchtungselement an seiner flächigen Seite kontaktiert,
iii) Anschließen von Steuerleitungen und Verbinden mit einem Controller (6) und ggf. einem Lichtsensor (7),
iv) ggf. Einbau in einen Rahmen oder Einbringen in den Zwischenraum zwischen zwei zueinander beabstandet angeordneter Scheiben, wobei die lichte Weite zwischen den Scheiben in etwa der Dicke des Stapels aus Displays (2) und Hinterleuchtungselement (3) entspricht.

## Claims

1. A double-sided display screen, comprising:
- two flat displays (2), each having a front and a rear side,
- a backlighting element (3),
- wherein the displays (2) are arranged at a distance from each other with their rear sides facing one another, with the backlighting element (3) in the intermediate space defined by the displays, and the backlighting element (3) is capable of controlled light emission in two opposite directions, and
- wherein the backlighting element comprises a light guide plate (30) with an LED lighting element (31),
- wherein the light guide plate has two opposite end faces and a front and a rear face connecting them, and
- on the front side and the rear side of the light guide plate (30) reflector dots (301, 302) are printed or moulded, and
- the reflector dots (301, 302) on the front side and on the rear side respectively form a grid with rows aligned transversely to a light incidence direction and columns aligned parallel to the light incidence direction, wherein adjacent columns of the grid of reflector points (301, 302) have a constant column spacing (Ah), and the grid of the reflector points (301) on the front side and the grid of reflector dots (302) on the rear side are offset with respect to each other,
**characterised in that**
• one LED lighting element (31) is present on each of the two opposite end faces, and
• row spacings (Av1, Av2, Av3) between neighboring rows of the grid of reflector points (301, 302) decrease toward the center of the display (2), and
• within a row, a diameter (D1) of a reflector point which is closer to the centre is smaller than a diameter (D2) of an edge-ward reflector point,
such that on the front side and the rear side respectively an exit luminance taking into account the luminance and the exit radiation cone of the lighting elements (31) is constant over the surface, wherein the values of the luminance on the front side and the rear side of the light guide plate (30) may be different.

2. The double-sided display screen according to the preceding claim **characterized in that** more and/or larger reflector dots are used on the front side than on the rear side.

3. The double-sided display according to one of the preceding claims, **characterised in that** the display (2) and the backlighting element (3 are held by
- by a frame (4), and/or
- by two panes enclosing the stack of displays and backlighting element between each other.

4. The double-sided screen according to one of the preceding claims, **characterised in that** between the backlighting element (3) and at least one of the displays (2) a diffuser layer (33), in particular two diffusor layers (33), installed on opposite sides of the backlighting element (3), are enclosed.

5. The double-sided screen according to claim 4, **characterized in** the diffuser layer (33) is transflective.

6. Double-sided screen according to one of claims 4 or 5, **characterized in that** the diffuser layer consists of prisms or microlenses which are mechanically or chemically formed on the surface of the light guide plate.

7. The double-sided screen according to one of the preceding claims, **characterised in that** between the backlighting element (3) respectively the diffuser layer (33) and the rear side of at least one of the displays (2) light amplifiying elements (33) are provided in the form of a coating or a film.

8. The double-sided screen according to one of the preceding claims, **characterised in that** an ambient luminance measuring light sensor(7) associated with one of the displays (2) is present.

9. The double-sided screen according to any of the preceding claims, **characterized in that** it is configured such that
a. on both displays information in the form of text and/or images can be displayed simultaneously, wherein the displayed information may be the same or may be different on both displays, and
b. a brightness setting can be done separately for each display.

10. The double-sided screen according to the previous claim, **characterized in that** it is configured such that the brightness setting can be set by adjusting the display transparency in the direction appropriate for the respective display.

11. The double-sided screen according to claim 8 and one of the of claims 9 or 10, **characterized in that** it is configured to change the brightness setting of a display (2) assigned to a light sensor (7) automatically according to an ambient luminance measured by the light sensor.

12. A method of manufacturing a double-sided screen according to any one of claims 1-11, **characterized by** the steps of
i. providing two flat matrix displays, each having a front and a rear side, as well as a backlighting element (3),
ii. placing the displays (2) and the backlighting element (3) on top of one another (3), so that the rear sides of each display contacts the backlighting element at its large side,
iii. attaching control lines and connecting to a controller (6) and, if applicable, a light sensor (7),
iv. if applicable, installation in a frame or insertion in the space between two spaced-apart panes, whereby the inner width between the panes corresponds approximately to the thickness of the stack of displays (2) and backlighting element (3).

## Revendications

1. Écran double face, comprenant :
- deux écrans plats (2) ayant chacun une face avant et une face arrière,
- un élément de rétro-éclairage (3),
- les écrans plats (2), étant tournés l'un vers l'autre avec leur face arrière, sont disposé à une certaine distance l'un de l'autre, avec l'élément de rétro-éclairage (3) dans l'espace intermédiaire défini par les écrans, et l'élément de rétro-éclairage (3) est capable d'émettre de la lumière de manière contrôlée dans deux directions opposées, et
- l'élément de rétro-éclairage comprenant une plaque de guidage de lumière (30) avec un élément lumineux LED (31),
- la plaque de guidage de lumière ayant deux côtés opposes et une face avant et une face arrière qui les relie, et
- sur la face avant et la face arrière de la plaque de guidage de lumière (30), des points réflecteurs (301, 302) sont imprimés ou formés, et
- les points réflecteurs (301, 302) sur la face avant et sur la face arrière forment respectivement une grille avec des rangées alignées transversalement à une direction d'incidence de la lumière et des colonnes alignées parallèlement à la direction d'incidence de la lumière, dans laquelle des colonnes adjacentes de la grille de points réflecteurs ( 301, 302) ont un espacement de colonne constant (Ah), et la grille des points réflecteurs (301) sur la face avant et la grille des points réflecteurs (302) sur la face arrière sont décalées l'une par rapport à l'autre,
**caractérisé en ce que**
- sur chacune des deux faces frontales opposées un élément lumineux à LED (31) est présent, et
- des espacements de rangées (Av1, Av2, Av3) entre les rangées voisines de la grille de points réflecteurs (301, 302) diminuent vers le centre du écran plats (2), et
- • à l'intérieur d'une rangée, un diamètre (D1) d'un point réflecteur qui est plus proche du centre est plus petit qu'un diamètre (D2) d'un point réflecteur côté bord,
de telle sorte que sur la face avant et la face arrière respectivement une luminance de sortie tenant compte de la luminance et du cône de rayonnement de sortie des éléments d'éclairage (31) est constante sur la surface, les valeurs de la luminance sur la face avant et la face arrière de la plaque de guidage de lumière (30) peut être différent.

2. Ecran double face selon la revendication précédente **caractérisé en ce que**, plus de points réflecteurs et/ou des points réflecteurs plus grands sont utilisés sur la face avant que sur la face arrière.

3. Ecran double face selon l'un des revendications précédents, **caractérisé en ce que** l'écran(2) et l'élément de rétroéclairage (3) sont maintenu
- par un cadre (4), et/ou
- par deux panneaux entourant la pile des l'écrans et l'élément de rétroéclairage.

4. Ecran double face selon l'un des précédents revendications, **caractérisé en ce que**, entre l'élément de rétro-éclairage (3) et au moins l'un des écrans (2), une couche de diffusion (33), en particulier deux couches de diffusion (33) sur les côtés opposés d'élément de rétro-éclairage (3), est enclavé.

5. Ecran double face selon la revendication 4, **caractérisé en ce que** la couche de diffusion (33) est transflective.

6. Écran double face selon l'une des revendications 4 ou 5, **caractérisée en ce que** la couche de diffusion est constituée de prismes ou de microlentilles formées mécaniquement ou chimiquement sur la surface de la plaque de guidage de lumière.

7. Ecran double face selon l'un des revendications précédents **caractérisé en ce que**, entre l'élément de rétro-éclairage (3) ou la couche de diffusion (33) et la face arrière de au moins l'un des écrans (2) des éléments de renforcement (33) sous forme de revêtement ou de film sont présents.

8. Écran double face selon l'un des revendications précédents, **caractérisé en ce qu'**un capteur de lumière (7) mesurant la lumière ambiante et associé à un des écrans (2) est présent.

9. Ecran double face selon l'une des revendications précédentes **caractérisé en ce qu'**il est conçu pour permettre que
a. les deux écrans peuvent afficher simultanément des informations sous forme de texte et/ou des images, les informations étant affichées sur les deux écrans peuvent être identiques ou différentes, et
b. un réglage de la luminosité peut être effectué séparément pour chaque écran.

10. Écran double face selon la revendication précédente, **caractérisé en ce qu'**il est configuré de telle sorte que le réglage de la luminosité peut être réglé en ajustant la transparence de l'affichage dans la direction appropriée pour l'affichage respectif.

11. Écran double face selon la revendication 8 et l'une des revendications 9 ou 10, **caractérisé en ce que** il est conçu pour contrôler automatiquement le réglage de la luminosité d'un écran (2) associé à un capteur de lumière (7) à l'aide d'une luminance ambiante mesurée par le capteur de lumière.

12. Procédé de fabrication d'un écran double face selon l'une des revendications 1 à 11, **caractérisé par** les étapes suivantes
I. mise à disposition de deux écrans matriciels plats chacunun ayant une face avant et une face arrière, ainsi qu'un élément de rétro-éclairage (3),
II. placer les écrans (2) et l'élément de rétro-éclairage (3) l'un sur l'autre, de telle sorte que la face arrière de chaque écran contacte l'élément de rétro-éclairage sur sa côté grande,
III. connecter les lignes de commande et les relier à un contrôleur (6) et, le cas échéant, un capteur de lumière (7),
IV. le cas échéant, le montage dans un cadre ou l'insertion dans l'espace entre des deux vitres espacées l'une de l'autre, la largeur intérieure entre les vitres correspond à peu près à l'épaisseur de l'empilement de l'ensemble formé par les écrans (2) et l'élément de rétro-éclairage (3).
